## Europäisches Patentamt

## European Patent Office

## Office européen des brevets

(19)

(11) Publication number: **0 024 938**
**B1**

(12)

# EUROPEAN PATENT SPECIFICATION

(45) Date of publication of patent specification: **09.05.84**

(51) Int. Cl.³: **G 01 N 27/12**

(21) Application number: **80303023.8**

(22) Date of filing: **29.08.80**

(54) Method of producing exhaust gas sensors.

(30) Priority: **29.08.79 US 70569**

(43) Date of publication of application:
**11.03.81 Bulletin 81/10**

(45) Publication of the grant of the patent:
**09.05.84 Bulletin 84/19**

(84) Designated Contracting States:
**DE FR GB IT SE**

(56) References cited:
**DE - A - 2 603 785**
**DE - A - 2 733 906**
**US - A - 3 578 409**

(73) Proprietor: FORD MOTOR COMPANY LIMITED
Eagle Way
Brentwood Essex CM13 3BW (GB)
(84) GB
(73) Proprietor: FORD-WERKE AKTIENGESELLSCHAFT
Ottoplatz 2 Postfach 21 03 69
D-5000 Köln 21 (DE)
(84) DE
(73) Proprietor: FORD FRANCE SOCIETE ANONYME
344 Avenue Napoléon Bonaparte B.P. 307
F-92506 Rueil Malmaison Cedex (FR)
(84) FR
(73) Proprietor: Ford Motor Company
The American Road
Dearborn, MI 48121 (US)
(84) IT SE

(72) Inventor: Achari, Achyuta
39823 Cheviot Road
Canton Michigan 48188 (US)

(74) Representative: Drakeford, Robert William et al,
Ford Motor Company Limited 15/448, Research &
Engineering Centre Laindon
Basildon Essex SS15 6EE (GB)

Courier Press, Leamington Spa, England.

# Description

This invention relates to a method of producing an exhaust gas sensor.

An exhaust gas sensor of preferred design has a titania sensing element that is immersed in exhaust gases from an internal combustion engine throughout its useful life. The titania is a metal oxide ceramic material that has an electrical resistance that varies as a function of the partial pressure of oxygen in the exhaust gases to which the sensor is exposed.

We have found that, when the titania element is immersed in exhaust gases that contain the products of combustion of engine oils that contain zinc dialkyldithiophosphate oil additives, the products of combustion cause zinc phosphate and other, zinc/phosphorous compounds to be deposited on the titania element of the exhaust gas sensor. The zinc compounds are semiconductor materials that cause a shunting effect in the titania ceramic structure and this reduces the electrical resistance between electrodes connected to the titania element. The electrical resistance between these terminals is a function of the characteristics of the titania ceramic material under normal circumstances and varies with the oxygen content of the medium that surrounds the titania element. When immersed in exhaust gases from an engine, the titania element has a substantial change in electrical resistance as a result of excursions of the exhaust gases through compositions corresponding to rich and lean air/fuel ratios of the mixture supplied to the engine. The titania element cannot function properly if the exhaust gases contain substantial quantities of zinc/phosphorous compounds because these are the cause of the formation of a continuous path of semiconductive zinc/phosphorous compounds along the grain boundaries of the titania element.

According to the present invention there is provided a method of producing an exhaust gas sensor which comprises a titania ceramic sensor element characterised in that the sensor element is treated with an inhibitor which contains an organic salt of magnesium and/or calcium that forms an oxide upon heating in the presence of oxygen and which is capable of reacting with phosphorous on exposure to motor vehicle engine exhaust gases containing zinc/phosphorous compounds without forming a semiconductor compound.

The method of the present invention provides an inhibitor coating on the titania element that prevents the formation of zinc/phosphorous compounds along the grain boundaries. The inhibitor coating is not a semiconductive material, reacts with phosphorous in preference to zinc, and does not form a continuous coating when it reacts with the zinc/phosphorous compounds. The method comprises, generally, the step of applying an inhibitor coating to a titania exhaust gas sensor element to prevent loss of the effectiveness of the titania element as an exhaust gas sensor as a result of the deposition thereon of zinc/phosphorous compounds. The inhibitor coating preferably is applied as a water solution of mixed organic salts of magnesium or calcium, which forms an inhibitor coating.

The invention will now be described in more detail with reference to preferred embodiments thereof.

In accordance with the preferred method of the present invention, a compound of a metal and acetate, an organic material that when applied or after heating inhibits the formation of zinc/phosphorous compounds on the surface of a metal oxide ceramic material is used. The compounds of zinc and phosphorous are of a glassy consistency and when deposited on the surface of the metal oxide ceramic material can cause a loss of effectiveness of an exhaust gas sensor in which the metal oxide ceramic material is used.

The metal oxide ceramic material is titanium dioxide (titania), a material which has found widespread use in exhaust gas sensors required in feedback fuel control systems for internal combustion engines. The exhaust gas sensors are positioned in the exhaust gases that emanate from the engine and, thus, are exposed to the various products of combustion.

Metal oxide ceramic materials in the exhaust gas sensors are porous to some degree and have grain boundaries within them. The titania sensor has an electrical resistance that varies as a function of the oxygen content of the exhaust gases to which it is exposed.

The undesirable zinc/phosphorous compounds are deposited on the metal oxide ceramic material as a result of the combustion of zinc dialkyldithiophosphates normally contained in engine oils. This undesirable deposit prevents the ceramic material and usual noble metals on the exhaust gas sensors from functioning as they should in producing the desired electrical signal variations in response to changing oxygen partial pressures in the exhaust gases. Combustion of a lean air/fuel mixture in an engine produces exhaust gases that contain a large amount of oxygen as compared to exhaust gases produced by the combustion of a rich air/fuel mixture. The purpose of the exhaust gas sensor is to detect transitions between the lean and rich mixture conditions so that the average of the mixture supplied to the engine can be held at or near the stoichiometric level.

The grain boundaries in the metal oxide ceramic material of the exhaust gas sensor are the locations where deposits tend to accumulate. The glassy coating formed by zinc/phosphorous compounds is semiconductive and is quite continuous along these grain boundaries. As a result, in the titania exhaust gas sensor, the zinc/phosphorous compounds tend to prevent an electrical resistance change, between the usual electrodes located in spaced relationship in the titania element, in response to exhaust gas compositional changes relative to the stoichiometric value of air and fuel supplied to the engine. In other words, the titania exhaust gas sensor fails to function as required to detect air/fuel mixture excursions about stoichiometry. This is due to the glassy zinc/phosphorous compounds deposited on the titania.

As previously stated, the glassy coating is the result of the combustion of zinc dialkyldithiophosphates. These zinc/phosphorous additives are contained in varying proportions in engine oils marketed in most countries. The zinc dialkyldithiophosphates decompose to form the zinc/phosphorous compounds that are deposited on the exhaust gas sensor ceramic elements. The zinc/phosphorous compounds can be complex in the mixture of these that accumulates on the exhaust gas sensor metal oxide ceramic elements, but the compounds are primarily comprised of zinc phosphate. The greater the burning of oil in an engine and the greater the content of the zinc dialkyldithiophosphates in the oil, the faster the zinc phosphates accumulate on the metal oxide ceramic elements of the sensors in the absence of use of the method of the present invention.

In the method of the present invention, the formation of zinc/phosphorous compounds on the surface of an exhaust gas sensor ceramic element is inhibited by the application to the ceramic element of a coating of an organic salt dissolved in distilled water, such as a water solution of a mixture of magnesium acetate $[Mg(C_2H_3O_2)_2]$ and calcium acetate $[Ca(C_2H_3O_2)_2]$ in equal parts. The acetate, upon heating of the compound, decomposes to form an oxide and is an organic material that in combination with hydrogen forms a weak acid. This is the presently preferred method. The application of this coating to the ceramic element of an oxygen sensor, whether over the usual noble metals already deposited thereon or not, inhibits the stabilization or adhesion of zinc/phosphorous compounds to the sensor. When the zinc/phosphorous compounds in the exhaust gases reach the sensor, the organic salt (which upon heating of the sensor or otherwise may have decomposed to a mixture of metal oxides) will give up its metal component. In the preferred method, either magnesium or calcium or both are substituted for the zinc in the zinc/phosphorous compounds that contact the organic-salt-coated metal oxide ceramic element of the sensor.

It is desirable that the organic salt be applied to the sensor metal oxide element when the sensor is first manufactured, but the inventor has found that exhaust gas sensors of the titania type can be rejuvenated after failure, due to zinc/phosphorous compound deposition on the titania, by immersion of the titania elements thereof in a solution of equal parts of a mixture of 1.0 molar solutions of $[Mg(C_2H_3O_2)_2]$ and $[Ca(C_2H_3O_2)_2]$ and by heating thereafter to 850° for five minutes. These sensors returned to their original working condition after immersion in this organic salt solution and it was found to be due to nonconductive and thermodynamically stable calcium/magnesium phosphorous compounds present on the ceramic elements of the sensor. These calcium/magnesium/phosphorous compounds are of a nonconductive and discontinuous character and do not inhibit the normal function of the exhaust gas sensors. Phosphorous compounds on the sensor ceramic elements are not harmful unless they prevent the generation of the exhaust gas sensor electrical signals desired. Zinc/phosphorous compounds are harmful, but neither magnesium nor calcium compounds with phosphorous are harmful to sensor operation.

The zinc/phosphorous compounds in exhaust gases and the organic salts on the metal oxide ceramic elements react to form other compounds. Phosphorous compounds are formed having metals other than zinc as a constituent. The organic radical compounds, which may have decomposed to an oxide or other element or radical, reacts with the zinc and becomes an innocuous compound from the standpoint of its presence, if present, on the metal oxide ceramic materials in the exhaust gas sensor.

The method of the invention inhibits the loss of effectiveness of the metal oxide ceramic material of an exhaust gas oxygen sensor by preventing the formation of zinc/phosphorous compounds on the ceramic material. Sulfur compounds also may form on ceramic material used in an exhaust gas environment, the method of the invention can be used to prevent this from occurring as well.

## Claims

1. A method of producing an exhaust gas sensor which comprises a titania ceramic sensor element characterised in that the sensor element is treated with an inhibitor which contains an organic salt of magnesium and/or calcium that forms an oxide upon heating in the presence of oxygen, and which is capable of reacting with phosphorous on exposure to motor vehicle engine exhaust gases containing zinc/phosphorous compounds without forming a semiconductor compound.

2. A method according to Claim 1 wherein the inhibitor material comprises magnesium acetate and/or calcium acetate.

## Patentansprüche

1. Verfahren zur Herstellung eines Abgassensors, der ein keramisches Sensorelement aus Titanoxyd umfasst, dadurch gekennzeichnet, dass man das Sensorelement mit einem Inhibitor behandelt, der ein organisches, beim Erhitzen in Gegenwart von Sauerstoff ein Oxyd bildendes Magnesium- und/oder Calciumsalz enthält und der bei der Einwirkung von Zink/Phosphorverbindungen enthaltenden Kraftfahrzeugmotorauspuffgasen mit Phosphor ohne Bildung einer Halbleiterverbindung reagieren kann.

2. Verfahren nach Anspruch 1, worin das Inhibitormaterial aus Magnesiumacetat und/oder Calciumacetat besteht.

## Revendications

1. Méthode de production d'un détecteur de gaz d'échappement qui comprend un élément de détection en céramique à l'oxyde de titane caractérisé en ce que l'élément de détection est traité avec un inhibiteur qui contient un sel organique de magnésium et/ou de calcium qui forme un oxyde par chauffage en présence d'oxygène, et qui est capable de réagir avec le phosphore au contact des gaz d'échappement des moteurs de véhicules à traction automotrice contenant des composés zinc/phosphore, sans former de composé semi-conducteur.

2. Méthode selon la revendication 1, caractérisée en ce que le matériau inhibiteur contient de l'acétate de magnésium et/ou de l'acétate de calcium.